# FASCICULE DE BREVET EUROPEEN

(11) **EP 3 623 260 B1**
(45) Date de publication et mention de la délivrance du brevet: **09.02.2022**
(21) Numéro de dépôt: 19196840.3
(22) Date de dépôt: 12.09.2019
(51) Int. Cl.: B62D 1/184

(54) **DISPOSITIF DE VERROUILLAGE EN POSITION D'UNE COLONNE DE DIRECTION, ET ENSEMBLE DE COLONNE DE DIRECTION ASSOCIÉ**
POSITIONSVERRIEGELUNGSVORRICHTUNG EINER LENKSÄULE, UND ENTSPRECHENDE LENKSÄULENEINHEIT
DEVICE FOR LOCKING A STEERING COLUMN IN POSITION, AND ASSOCIATED STEERING COLUMN ASSEMBLY

(30) Priorité: 12.09.2018 FR 1858168
(43) Date de publication de la demande: 18.03.2020
(73) Titulaire: Fuji Autotech France SAS, 25350 Mandeure (FR)
(72) Inventeur: COLEY, Pascal, 70110 GOUHENANS (FR); TOMASINO, Hervé, 25600 NOMMAY (FR)
(74) Mandataire: Lavoix

(56) Documents cités:
- EP-A1- 1 681 223
- FR-A1- 2 962 101

## Description

La présente invention concerne un dispositif de verrouillage en position d'une colonne de direction, comportant :
- une bride définissant un passage de réception de la colonne de direction, et
- une came mobile entre une position de déverrouillage dans laquelle la colonne de direction est libre à se déplacer par rapport à la bride, et une position de verrouillage dans laquelle la bride bloque le déplacement de la colonne de direction.

Le document FR 2 962 101 décrit un tel dispositif de verrouillage.

Un tel dispositif de verrouillage est notamment utilisé pour permettre d'ajuster puis de bloquer la position de la colonne de direction par rapport à la structure du véhicule, en fonction de la morphologie du chauffeur.

Un tel dispositif ne donne cependant pas entière satisfaction. En effet, le blocage de la colonne de direction par un tel dispositif de verrouillage peut ne pas être suffisamment rigide. De plus, le changement entre la position de déverrouillage et la position de verrouillage de la came mobile est parfois compliqué à manipuler.

Un but de l'invention est donc de proposer un dispositif de verrouillage présentant une meilleure propriété de verrouillage.

Un autre but de l'invention est d'assurer un changement facile entre la position de verrouillage et la position de de déverrouillage de la came mobile.

A cet effet, l'invention a pour objet un dispositif de verrouillage en position d'une colonne de direction réglable de véhicule automobile, la colonne de direction s'étendant suivant une direction longitudinale, le dispositif de verrouillage comportant :
- une bride, la bride comprenant un premier et un deuxième flasques espacés de manière à définir entre eux un passage de réception de la colonne de direction, et
- une came mobile en regard de la bride, la came mobile étant rotative par rapport à la bride,
la came mobile comprenant au moins trois bossages non-alignés faisant saillie vers la bride, et la bride comprenant au moins deux bossages complémentaires faisant saillie vers la came mobile,
la came étant mobile rotative autour d'un axe transversal sensiblement perpendiculaire à la direction longitudinale entre une position de déverrouillage, dans laquelle les bossages ne sont pas en appui sur les bossage complémentaires et les premier et deuxième flasques relâchent la colonne de direction de sorte que la colonne de direction soit libre à se déplacer suivant la direction longitudinale, et une position de verrouillage, dans laquelle les bossages sont en appui contre les bossages complémentaires de sorte que les premier et deuxième flasques serrent la colonne de direction et bloque son déplacement suivant la direction longitudinale.

Le dispositif de verrouillage selon l'invention peut comprendre l'une ou plusieurs des caractéristiques suivantes, prise(s) isolément ou suivant toutes combinaisons techniquement possibles :
- dans la position de verrouillage, la came mobile est bloquée par rapport à la bride dans une direction sensiblement verticale, la direction verticale étant sensiblement perpendiculaire à la direction longitudinale et à la direction transversale ;
- les bossages définissent des surfaces d'appui, et les bossages complémentaires définissent des surfaces d'appui complémentaires, au moins une des surfaces d'appui et des surfaces d'appui complémentaires étant dentée ;
- les deux bossages complémentaires présentent une forme allongée suivant sensiblement la direction verticale ;
- un premier bossage complémentaire et un deuxième bossage complémentaire délimitent entre eux un creux ;
lorsque la came mobile occupe sa position de déverrouillage, un premier bossage et un deuxième bossage sont disposés de part de d'autre du premier bossage complémentaire, et un troisième bossage est disposé dans le creux ;
lorsque la came mobile occupe sa position de verrouillage, les premier et deuxième bossages sont en appui contre le premier bossage complémentaire, et le troisième bossage est en appui contre le deuxième bossage complémentaire;
- le dispositif comporte en outre un organe de fixation allongé fixé à la came mobile, et la bride comprend une fenêtre apte à recevoir l'organe de fixation, la fenêtre étant de forme allongée suivant la direction verticale, un ensemble comprenant la came mobile et l'organe de fixation étant apte à se déplacer suivant la direction verticale en étant guidé par la fenêtre lorsque la came mobile occupe sa position de déverrouillage ;
- les bossages sont répartis autour de l'organe de fixation ;
- la fenêtre comprend une première surface de limitation et une deuxième surface de limitation, et la came est mobile dans la direction verticale entre une position supérieure et une position inférieure ;
lorsque la came mobile occupe sa position supérieure, l'organe de fixation est en appui contre la deuxième surface de limitation de sorte que la deuxième surface de limitation empêche le déplacement de la came mobile vers le haut,
lorsque la came mobile occupe sa position inférieure, l'organe de fixation est en appui contre la première surface de limitation de sorte que la première surface de limitation empêche le déplacement de la came mobile vers le bas.

L'invention a également pour objet un ensemble de colonne de direction comportant une colonne de direction et un dispositif de verrouillage tel que décrit ci-dessus.

L'invention sera mieux comprise à la lecture de la description qui va suivre, donnée uniquement à titre d'exemple, et faite en se référant aux dessins annexés sur lesquels :
- la Figure 1 est une vue en perspectif d'un dispositif de verrouillage selon l'invention ;
- la Figure 2 est une vue en détail en face du dispositif de verrouillage de la Figure 1, la came mobile occupant sa position de verrouillage ; et
- la Figure 3 est une vue similaire à la Figure 1, la came mobile occupant sa position de déverrouillage.

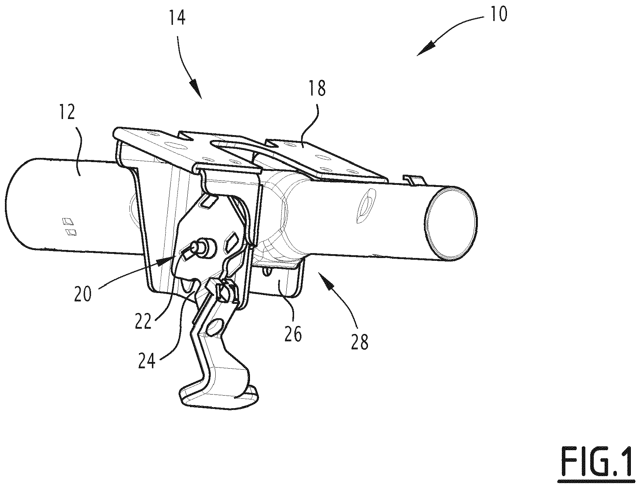

En référence à la Figure 1, l'ensemble de colonne de direction 10 d'un véhicule automobile comporte une colonne de direction réglable 12 et un dispositif de verrouillage 14 en position de la colonne de direction 12.

La colonne de direction 12 s'étend suivant une direction longitudinale. Elle est raccordée, à une extrémité, à un volant (non-représenté sur les Figures) du véhicule automobile.

La colonne de direction 12 est réglable suivant la direction longitudinale et/ou en hauteur.

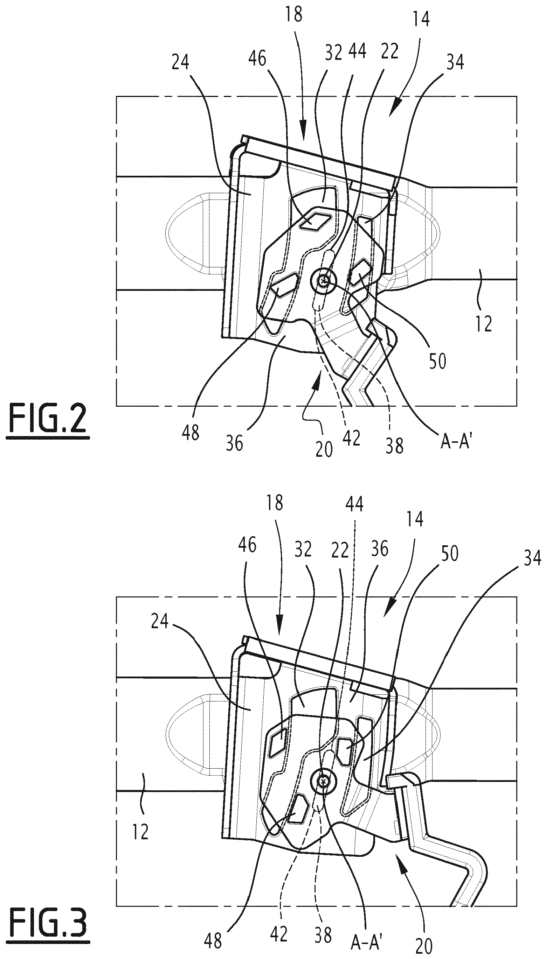

Le dispositif de verrouillage 14 est représenté plus en détail sur les Figures 2 et 3. Il comporte une bride 18 et une came mobile 20 comprenant au moins trois bossages, comme il sera décrit plus bas.

Le dispositif de verrouillage 14 comporte également un organe de fixation allongé 22 fixé à la came mobile 20.

La bride 18 comprend un premier flasque 24 et un deuxième flasque 26 espacés de manière à définir entre eux un passage de réception 28 de la colonne de direction 12. Les premier et deuxième flasques 24, 26 sont sensiblement parallèles l'un à l'autre.

La bride 18 comprend également au moins deux bossages complémentaires faisant saillie vers la came mobile 20. Selon le mode de réalisation illustré sur les Figures, la bride 18 comprend un premier bossage complémentaire 32 et un deuxième bossage complémentaire 34. Selon le mode de réalisation représenté sur la Figure 1, les premier et deuxième bossages complémentaires 32, 34 sont disposés sur le premier flasque 24 à l'opposé du passage de réception 28. En variante, les premier et deuxième bossages complémentaires 32, 34 sont disposés sur le deuxième flasque 26 à l'opposé du passage de réception 28.

Les premier et deuxième bossages complémentaires 32, 34 définissent entre eux un creux 36.

La bride 18 comprend en outre une fenêtre 38 apte à recevoir l'organe de fixation 22.

Le premier bossage complémentaire 32 présente une forme allongée suivant une direction sensiblement verticale, la direction verticale étant sensiblement perpendiculaire à la direction longitudinale.

De manière similaire, le deuxième bossage complémentaire 34 présente également une forme allongée suivant sensiblement la direction verticale.

Les premier et deuxième bossages complémentaires 32, 34 définissent chacun une surface d'appui complémentaire configurée pour coopérer avec la came mobile 20 pour bloquer la position relative entre la bride 18 et la came mobile 20, comme il sera décrit plus bas.

Avantageusement, au moins une surface d'appui complémentaire est dentée de sorte à augmenter la friction entre la bride 18 et la came mobile 20 afin de mieux bloquer la position relative entre celles-ci.

La fenêtre 38 s'étend sensiblement suivant la direction verticale. Elle est arrangée dans le creux 36.

La fenêtre 38 comprend une première surface de limitation 42 et une deuxième surface de limitation 44.

La came mobile 20 est disposée en regard de la bride 18.

La came mobile 20 comprend au moins trois bossages non-alignés faisant saillie vers la bride 18. Selon le mode de réalisation représenté sur les Figures, la came mobile 20 comprend un premier bossage 46, un deuxième bossage 48, et un troisième bossage 50. Les premier, deuxième, et troisième bossages 46, 48, 50 sont répartis autour de l'organe de fixation 22.

La came mobile 20 est montée rotative par rapport à la bride 18 autour d'un axe transversal A-A' s'étendant suivant une direction transversale, la direction transversale étant perpendiculaire aux directions longitudinale et verticale. La came 20 est mobile entre une position de déverrouillage, dans laquelle les bossages 46, 48, 50 ne sont pas en appui sur les bossages complémentaires 32, 34, et une position de verrouillage, dans laquelle les bossages 46, 48, 50 sont en appui contre les bossages complémentaires 32, 34.

La présence des trois bossages 46, 48, 50 non-alignés offre en particulier une meilleure stabilité de verrouillage entre la bride 18 et la came mobile 20 par rapport à des configurations où la came mobile 20 comprend seulement deux ou quatre bossages.

Lorsque la came mobile 20 occupe sa position de déverrouillage, les premier et deuxième flasques 24, 26 relâchent la colonne de direction 12 de sorte que la colonne de direction 12 soit libre à se déplacer suivant la direction longitudinale et/ou suivant la direction verticale.

Lorsque la came mobile 20 occupe sa position de verrouillage, les premier et deuxième flasques 24, 26 serrent la colonne de direction 12 et empêchent son déplacement suivant la direction longitudinale et/ou suivant la direction verticale.

Lorsque la came mobile 20 occupe sa position de verrouillage, la came mobile 20 est bloquée par rapport à la bride 18 sensiblement dans la direction verticale. Ceci assure que la came mobile 20 reste dans sa position de verrouillage afin que la colonne de direction 12 reste maintenue par les premier et deuxième flasques 24, 26.

Les premier, deuxième, et troisième bossages 46, 48, 50 définissent chacun une surface d'appui. Les surfaces d'appui sont configurées pour coopérer avec les surfaces d'appui complémentaires de la bride 18 lorsque la came mobile 20 occupe sa position de verrouillage, afin de verrouiller la position relative entre la bride 18 et la came mobile 20.

Avantageusement, au moins une surface d'appui est dentée de sorte à augmenter la friction entre la bride 18 et la came mobile 20 afin de mieux bloquer la position relative entre celles-ci.

L'organe de fixation 22 est par exemple une vis.

Avantageusement, un ensemble comprenant la came mobile 20 et l'organe de fixation 22 est apte à se déplacer suivant sensiblement la direction verticale en étant guidé par la fenêtre 38 lorsque la came mobile 20 occupe sa position de déverrouillage. Plus précisément, l'organe de fixation 22 est inséré dans la fenêtre 38 et est solidaire avec la came mobile 20 de sorte que le déplacement de l'organe de fixation 22 dans la fenêtre 38 entraîne le déplacement de l'ensemble de la came mobile 20 et l'organe de fixation 22 suivant sensiblement la direction verticale. Ceci permet d'ajuster facilement la position de la came mobile 20 par rapport à la bride 18 dans la direction verticale.

Comme visible sur la Figure 3, lorsque la came mobile 20 occupe sa position de déverrouillage, le premier bossage 46 et le deuxième bossage 48 sont disposés de part de d'autre du premier bossage complémentaire 32, et le troisième bossage 50 est disposé dans le creux 36. Ainsi, les bossages 46, 48, 52 ne sont pas en appui sur les bossages complémentaires 32, 34. Par conséquent, la came mobile 20 est libre à tourner autour de l'axe transversal A-A', et les premier et deuxième flasques 24, 26 relâchent la colonne de direction 12.

Avantageusement, le déplacement de la came mobile 20 est délimité dans la direction verticale entre une position supérieure et une position inférieure, comme indiqué ci-dessus. Lorsque la came mobile 20 occupe sa position inférieure, l'organe de fixation 22 est en appui contre la première surface de limitation 42 de sorte que la première surface de limitation 42 empêche le déplacement supplémentaire de la came mobile 20 vers le bas. Lorsque la came mobile 20 occupe sa position supérieure, l'organe de fixation 22 est en appui contre la deuxième surface de limitation 44 de sorte que la deuxième surface de limitation 44 empêche le déplacement supplémentaire de la came mobile 20 vers le haut.

Entre les positions supérieure et inférieure de la came mobile 20, le troisième bossage 50 est libre à se déplacer dans le creux 36 et n'est en appui sur aucun bossage complémentaire. Autrement dit, le troisième bossage 50 n'empêche pas le déplacement de la came mobile 20 dans la direction verticale.

Comme visible sur la Figure 2, lorsque la came mobile 20 occupe sa position de verrouillage, les premier et deuxième bossages 46, 48 sont en appui contre le premier bossage complémentaire 32, et le troisième bossage 50 est en appui contre le deuxième bossage complémentaire 34. Ceci bloque la position relative entre la came mobile 20 et la bride. De plus, la coopération entre la bride 18 et la came mobile 20 exerce une force sur les premier et deuxième flasques 24, 26 de sorte que la colonne de direction 14 est immobilisée entre les premier et deuxième flasques 24, 26.

L'utilisation du dispositif de verrouillage 14 sera maintenant brièvement décrite.

Tout d'abord, la came mobile 20 occupe sa position de déverrouillage, et les bossages 46, 48, 50 ne sont pas en appui sur les bossages complémentaires 32, 34. Ainsi, la came mobile 20 est libre à tourner autour de l'axe transversal A-A'.

Avantageusement, la came mobile 20 est apte à se déplacer avec l'organe de fixation 22 suivant sensiblement la direction verticale entre les positions supérieure et inférieure de la came mobile 20. Ce déplacement de l'ensemble de la came mobile 20 et l'organe de fixation 22 est guidé par la fenêtre 38. Ce déplacement vertical de la came mobile 20 permet à un utilisateur d'ajuster la position de la came mobile 20 dans la direction verticale. Pendant le déplacement vertical de la came mobile 20, le troisième bossage 50 se déplace dans le creux 36 sans entrer en appui sur les bossages complémentaires 32, 34.

Lorsqu'un utilisateur souhaite fixer la position de la colonne de direction 12 dans la direction longitudinale et/ou dans la direction verticale, il tourne la came mobile 20 autour de l'axe transversal A-A' vers sa position de verrouillage. Ceci faisant, les premier et deuxième bossages 46, 48 de la came mobile 20 entrent en appui contre le premier bossage complémentaire 32, et le troisième bossage 50 entre en appui contre le deuxième bossage complémentaire 34, de sorte que la came mobile 20 est verrouillée par rapport à la bride 18 dans la position de verrouillage. De plus, l'appui de la came mobile 20 sur la bride 18 exerce une force d'appui sur les premier et deuxième flasques 24, 26 de sorte que les premier et deuxième flasques 24, 26 serrent la colonne de direction 12 et immobilisent la colonne de direction 12 dans la direction longitudinale et/ou la direction verticale.

Grâce à l'invention décrite ci-dessus, la fixation de la position de la came mobile 20 par rapport à la bride 18 est améliorée par rapport aux configurations qui présentent deux ou quatre bossages, en disposant les bossages 46, 48, 50 de manière non-alignée. De plus, le changement entre les positions de verrouillage et de déverrouillage de la came mobile 20 est simplifié.

## Revendications

1. Dispositif de verrouillage (14) en position d'une colonne de direction (12) réglable de véhicule automobile, la colonne de direction (12) s'étendant suivant une direction longitudinale, le dispositif de verrouillage (14) comportant :
- une bride (18), la bride (18) comprenant un premier et un deuxième flasques (24, 26) espacés de manière à définir entre eux un passage de réception (28) de la colonne de direction (12), et
- une came mobile (20) en regard de la bride (18), la came mobile (20) étant rotative par rapport à la bride (18),
la came mobile (20) comprenant au moins trois bossages (46, 48, 50) non-alignés faisant saillie vers la bride (18), et la bride (18) comprenant au moins deux bossages complémentaires (32, 34) faisant saillie vers la came mobile (20),
la came (20) étant mobile rotative autour d'un axe transversal (A-A') sensiblement perpendiculaire à la direction longitudinale entre une position de déverrouillage, dans laquelle les bossages (46, 48, 50) ne sont pas en appui sur les bossage complémentaires (32, 34) et les premier et deuxième flasques (24, 26) relâchent la colonne de direction (12) de sorte que la colonne de direction (12) soit libre à se déplacer suivant la direction longitudinale, et une position de verrouillage, dans laquelle les bossages (46, 48, 50) sont en appui contre les bossages complémentaires (32, 34) de sorte que les premier et deuxième flasques (24, 26) serrent la colonne de direction (12) et bloque son déplacement suivant la direction longitudinale
les deux bossages complémentaires (32, 34) présentant une forme allongée suivant sensiblement la direction verticale
le dispositif de verrouillage étant **caractérisé en ce que** un premier bossage complémentaire (32) et un deuxième bossage complémentaire (34) délimitent entre eux un creux (36),
lorsque la came mobile (20) occupe sa position de déverrouillage, un premier bossage (46) et un deuxième bossage (48) sont disposés de part de d'autre du premier bossage complémentaire (32), et un troisième bossage (50) est disposé dans le creux (36),
lorsque la came mobile (20) occupe sa position de verrouillage, les premier et deuxième bossages (46, 48) sont en appui contre le premier bossage complémentaire (32), et le troisième bossage (50) est en appui contre le deuxième bossage complémentaire (34).

2. Dispositif de verrouillage (14) selon la revendication 1, dans lequel dans la position de verrouillage, la came mobile (20) est bloquée par rapport à la bride (18) dans une direction sensiblement verticale, la direction verticale étant sensiblement perpendiculaire à la direction longitudinale et à la direction transversale.

3. Dispositif de verrouillage (14) selon l'une quelconque des revendications précédentes, dans lequel les bossages (46, 48, 50) définissent des surfaces d'appui, et les bossages complémentaires (32, 34) définissent des surfaces d'appui complémentaires, au moins une des surfaces d'appui et des surfaces d'appui complémentaires étant dentée.

4. Dispositif de verrouillage (14) selon l'une quelconque des revendications précédentes, comportant en outre un organe de fixation (22) allongé fixé à la came mobile (20), et la bride (18) comprend une fenêtre (38) apte à recevoir l'organe de fixation (22), la fenêtre (38) étant de forme allongée suivant la direction verticale, un ensemble comprenant la came mobile (20) et l'organe de fixation (22) étant apte à se déplacer suivant la direction verticale en étant guidé par la fenêtre (38) lorsque la came mobile (20) occupe sa position de déverrouillage.

5. Dispositif de verrouillage (14) selon la revendication 4, dans lequel les bossages (46, 48, 50) sont répartis autour de l'organe de fixation (22).

6. Dispositif de verrouillage (14) selon l'une quelconque des revendications 4 ou 5, dans lequel la fenêtre (38) comprend une première surface de limitation (42) et une deuxième surface de limitation (44), et la came (20) est mobile dans la direction verticale entre une position supérieure et une position inférieure,
lorsque la came mobile (20) occupe sa position supérieure, l'organe de fixation (22) est en appui contre la deuxième surface de limitation (44) de sorte que la deuxième surface de limitation (44) empêche le déplacement de la came mobile (20) vers le haut,
lorsque la came mobile (20) occupe sa position inférieure, l'organe de fixation (22) est en appui contre la première surface de limitation (42) de sorte que la première surface de limitation (42) empêche le déplacement de la came mobile (20) vers le bas.

7. Ensemble (10) de colonne de direction, comportant une colonne de direction (12) réglable et un dispositif de verrouillage (14) selon l'une quelconque des revendications précédentes.

## Patentansprüche

1. Positions-Verriegelungsvorrichtung (14) einer einstellbaren Lenksäule (12) eines Kraftfahrzeugs, wobei sich die Lenksäule (12) gemäß einer Längsrichtung erstreckt, wobei die Verriegelungsvorrichtung (14) aufweist:
- einen Flansch (18), wobei der Flansch (18) eine erste und eine zweite Wange (24, 26) umfasst, die derart beabstandet sind, dass sie zwischen sich einen Empfangsdurchgang (28) für die Lenksäule (12) definieren, und
- eine dem Flansch (18) zugewandte bewegliche Kurvenscheibe (20), wobei die bewegliche Kurvenscheibe (20) im Verhältnis zum Flansch (18) rotatorisch ist,
wobei die bewegliche Kurvenscheibe (20) mindestens drei nicht fluchtende Erhebungen (46, 48, 50) umfasst, die in Richtung des Flanschs (18) hervorstehen, und der Flansch (18) mindestens zwei komplementäre Erhebungen (32, 34) umfasst, die in Richtung der beweglichen Kurvenscheibe (20) hervorstehen,
wobei die Kurvenscheibe (20) um eine transversale Achse (A-A'), die etwa senkrecht zur Längsrichtung ist, zwischen einer Entriegelungsposition, in welcher sich die Erhebungen (46, 48, 50) nicht auf den komplementären Erhebungen (32, 34) abstützen und die erste und zweite Wange (24, 26) die Lenksäule (12) derart freigeben, dass sich die Lenksäule (12) gemäß der Längsrichtung frei verlagern kann, und einer Verriegelungsposition, in welcher sich die Erhebungen (46, 48, 50) auf den komplementären Erhebungen (32, 34) abstützen, so dass die erste und zweite Wange (24, 26) die Lenksäule (12) spannen und ihre Verlagerung gemäß der Längsrichtung blockieren, rotatorisch beweglich ist,
wobei die zwei komplementären Erhebungen (32, 34) eine gemäß etwa der vertikalen Richtung längliche Form aufweisen,
wobei die Verriegelungsvorrichtung **dadurch gekennzeichnet ist, dass** eine erste komplementäre Erhebung (32) und eine zweite komplementäre Erhebung (34) zwischen sich einen Hohlraum (36) begrenzen,
wenn die bewegliche Kurvenscheibe (20) ihre Entriegelungsposition einnimmt, eine erste Erhebung (46) und eine zweite Erhebung (48) beiderseits der ersten komplementären Erhebung (32) angeordnet sind, und eine dritte Erhebung (50) im Hohlraum (36) angeordnet ist,
wenn die bewegliche Kurvenscheibe (20) ihre Verriegelungsposition einnimmt, sich die erste und zweite Erhebung (46, 48) auf der ersten komplementären Erhebung (32) abstützen und sich die dritte Erhebung (50) auf der zweiten komplementären Erhebung (34) abstützt.

2. Verriegelungsvorrichtung (14) nach Anspruch 1, wobei die bewegliche Kurvenscheibe (20) in der Verriegelungsposition im Verhältnis zum Flansch (18) in einer etwa vertikalen Richtung blockiert ist, wobei die vertikale Richtung etwa senkrecht zur Längsrichtung und zur transversalen Richtung ist.

3. Verriegelungsvorrichtung (14) nach einem der vorangehenden Ansprüche, wobei die Erhebungen (46, 48, 50) Abstützflächen definieren und die komplementären Erhebungen (32, 34) komplementäre Abstützflächen definieren, wobei mindestens eine der Abstützflächen und der komplementären Abstützflächen gezahnt ist.

4. Verriegelungsvorrichtung (14) nach einem der vorangehenden Ansprüche, aufweisend ferner ein längliches Befestigungsorgan (22), das an der beweglichen Kurvenscheibe (20) befestigt ist, und der Flansch (18) umfasst ein Fenster (38), das imstande ist, das Befestigungsorgan (22) aufzunehmen, wobei das Fenster (38) gemäß der vertikalen Richtung länglich ist, wobei eine Anordnung, die die bewegliche Kurvenscheibe (20) und das Befestigungsorgan (22) umfasst, imstande ist, sich gemäß der vertikalen Richtung zu verlagern, indem sie vom Fenster (38) geführt wird, wenn die bewegliche Kurvenscheibe (20) ihre Entriegelungsposition einnimmt.

5. Verriegelungsvorrichtung (14) nach Anspruch 4, wobei die Erhebungen (46, 48, 50) um das Befestigungsorgan (22) verteilt sind.

6. Verriegelungsvorrichtung (14) nach einem der Ansprüche 4 oder 5, wobei das Fenster (38) eine erste Begrenzungsfläche (42) und eine zweite Begrenzungsfläche (44) umfasst und die Kurvenscheibe (20) in der vertikalen Richtung zwischen einer oberen Position und einer unteren Position beweglich ist,
wenn die bewegliche Kurvenscheibe (20) ihre obere Position einnimmt, sich das Befestigungsorgan (22) auf der zweiten Begrenzungsfläche (44) derart abstützt, dass die zweite Begrenzungsfläche (44) die Verlagerung der beweglichen Kurvenscheibe (20) nach oben verhindert,
wenn die bewegliche Kurvenscheibe (20) ihre untere Position einnimmt, sich das Befestigungsorgan (22) auf der ersten Begrenzungsfläche (42) derart abstützt, dass die erste Begrenzungsfläche (42) die Verlagerung der beweglichen Kurvenscheibe (20) nach unten verhindert.

7. Lenksäulenanordnung (10), aufweisend eine einstellbare Lenksäule (12) und eine Verriegelungsvorrichtung (14) nach einem der vorangehenden Ansprüche.

## Claims

1. A device (14) for locking an adjustable motor vehicle steering column (12) in position, the steering column (12) extending along the longitudinal direction, the locking device (14) including:
- a clamp (18), the clamp (18) comprising first and second flanges (24, 26) spaced apart so as to define therebetween a receiving passage (28) for the steering column (12), and
- a movable cam (20) opposite the clamp (18), the movable cam (20) being rotatable relative to the clamp (18),
the movable cam (20) comprising at least three non-aligned bosses (46, 48, 50) protruding toward the clamp (18), and the clamp (18) comprising at least two complementary bosses (32, 34) protruding toward the movable cam (20),
the cam (20) being mounted rotating about a transverse axis (A-A') substantially perpendicular to the longitudinal direction between an unlocked position, in which the bosses (46, 48, 50) do not bear on the complementary bosses (32, 34) and the first and second flanges (24, 26) release the steering column (12) such that the steering column (12) is free to move along the longitudinal direction, and a locked position, in which the bosses (46, 48, 50) bear against the complementary bosses (32, 34) such that the first and second flanges (24, 26) grip the steering column (12) and block its movement along the longitudinal direction,
the two complementary bosses (32, 34) having an elongated shape substantially along the vertical direction,
the locking device being **characterized in that** a first complementary boss (32) and a second complementary boss (34) delimits a hollow (36) between them,
when the movable cam (20) occupies its unlocked position, a first boss (46) and a second boss (48) are disposed on either side of the first complementary boss (32), and a third boss (50) is disposed in the hollow (36),
when the movable cam (20) occupies its locked position, the first and second bosses (46, 48) bear against the first complementary boss (32), and the third boss (50) bears against the second complementary boss (34).

2. The locking device (14) according to claim 1, wherein in the locked position, the movable cam (20) is blocked relative to the clamp (18) in a substantially vertical direction, the vertical direction being substantially perpendicular to the longitudinal direction and to the transverse direction.

3. The locking device (14) according to any one of the preceding claims, wherein the bosses (46, 48, 50) define bearing surfaces, and the complementary bosses (32, 34) define complementary bearing surfaces, at least one of the bearing surfaces and the complementary bearing surfaces having teeth.

4. The locking device (14) according to any one of the preceding claims, further including an elongated fastening member (22) fastened to the movable cam (20), and the clamp (18) comprises a window (38) able to receive the fastening member (22), the window (38) having an elongated shape along the vertical direction, an assembly comprising the movable cam (20) and the fastening member (22) being able to move along the vertical direction while being guided by the window (38) when the movable cam (20) occupies its unlocked position.

5. The locking device (14) according to claim 4, wherein the bosses (46, 48, 50) are distributed around the fastening member (22).

6. The locking device (14) according to any one of claims 4 or 5, wherein the window (38) comprises a first limiting surface (42) and a second limiting surface (44), and the cam (20) is movable in the vertical direction between an upper position and a lower position,
when the movable cam (20) occupies its upper position, the fastening member (22) bears against the second limiting surface (44) such that the second limiting surface (44) prevents the movable cam (20) from moving upward,
when the movable cam (20) occupies its lower position, the fastening member (22) bears against the first limiting surface (42) such that the first limiting surface (42) prevents the movable cam (20) from moving downward.

7. A steering column assembly (10), including an adjustable steering column (12) and a locking device (14) according to any one of the preceding claims.
